# EUROPEAN PATENT SPECIFICATION

(11) **EP 3 512 893 B1**
(45) Date of publication and mention of the grant of the patent: **19.08.2020**
(21) Application number: 17764615.5
(22) Date of filing: 13.09.2017
(51) Int. Cl.: C08F 293/00, C08K 3/00, C08K 5/00, C08K 5/3415, C08K 5/375, C08F 214/22

(54) **FLUOROPOLYMER COMPOSITION COMPRISING A COLOURING COMPOUND**
FLUORPOLYMERZUSAMMENSETZUNG MIT EINER FÄRBEVERBINDUNG
COMPOSITION DE FLUOROPOLYMÈRE COMPORTANT UN COMPOSÉ COLORANT

(30) Priority: 16.09.2016 EP 16189232
(43) Date of publication of application: 24.07.2019
(73) Proprietor: Solvay Specialty Polymers Italy S.p.A., 20021 Bollate (MI) (IT)
(72) Inventor: CORASANITI, Martina, 21042 Caronno Pertusella (VA) (IT); DOSSI, Marco, 20162 Milano (MI) (IT); AVATANEO, Marco, 20030 Senago (MI) (IT); FANTONI, Matteo, 20020 Vanzaghello (MI) (IT); SRINIVASAN, Satchit, Dallas, Texas 75230 (US)
(74) Representative: Benvenuti, Federica
(86) International application number: PCT/EP2017/073010
(87) International publication number: WO 2018/050690

(56) References cited:
- EP-A1- 0 885 928
- EP-A1- 1 029 875
- EP-A1- 1 386 943
- EP-A1- 1 816 161
- WO-A1-91/02770

## Description

### Cross-reference to related application

This application claims priority to European application No. 16189232.8 filed on September 16, 2016, the whole content of this application being incorporated herein by reference for all purposes.

### Technical Field

The present invention pertains to a fluoropolymer composition comprising an organic colouring compound, to a process for the manufacture of said composition and to uses of said composition in various applications.

### Background Art

Fluoropolymers are widely used in various applications because of their inherent properties including weatherability, chemical resistance and corrosion resistance.

Fluoropolymers may be compounded by addition of one or more fillers such as colouring compounds depending on final use of the compositions so obtained.

However, there is still the need in the art for fluoropolymer compositions having homogeneously dispersed therein colouring compounds which enable obtaining articles showing long lasting superior colour retention properties.

In this area, EP 1029875 A23.08.2000 describes a moulding material intended for semiconductor-related production, which comprises a fluorine-containing multi-segment polymer having an elastomeric fluorine-containing polymer chain segment having a perhaloolefin unit as a recurring unit and a non-elastomeric fluorine-containing polymer chain segment. Usual additives may be blended in the said molding material and in crosslinkable compounds thereof, including for example, a filler, processing aid, plasticizer, coloring agent, and the like.

Also, WO 91/002770 07.03.1991 discloses a polymer blend comprising a fluorinated ethylene propylene copolymer and a fluoroelastomer comprising a bleck copolymer comprising at least one elastomeric segment comprising tetrafluoroethylene, vinylidene fluoride and hexafluoropropylene, and at least one non-elastomeric segment. Various additives can be added, such as for examples antioxidants, UV stabilizers, flame retardants, and pigments, of which exemplary embodiments described are all inorganic compounds such as titanium dioxide, antimony trioxide, zinc oxide.

EP 1816161 A08.08.2007 describes a thermoplastic fluoropolymer composition comprising a fluororesin, a cross-linked fluororubber, and a fluorine-containing thermoplastic fluoroelastomer, which may comprise additional ingredients, such as, for instance, *inter alia,* a pigment.

EP1 386 943 A discloses a curable fluoroelastomer composition comprising dyes, coloring agents or pigments for use as sealing elements.

### Summary of invention

It has been now surprisingly found that a composition comprising a fluorinated thermoplastic elastomer and an organic colouring compound advantageously enables dispersing homogeneously said colouring compound in the fluorinated thermoplastic elastomer matrix, while absorbing permanently light and retaining its colour in the long term, with easily tuned colour matching, unaffected by any side reaction caused by crosslinking conditions.

The composition of the present invention is thus particularly suitable for the manufacture of homogeneously coloured elastomeric articles comprising the same.

Also, it has been surprisingly found that the articles so obtained advantageously exhibit outstanding optical properties, while being endowed with outstanding mechanical properties over a wide range of temperatures up to low temperatures, in combination with excellent chemical resistance, UV resistance and weatherability, to be suitably used in various applications such as, for instance, low temperature applications.

Thus, in a first instance, the present invention pertains to a composition [composition (C)] comprising:
- at least one fluorinated thermoplastic elastomer, and
- at least one organic colouring compound,
wherein said fluorinated thermoplastic elastomer comprises, preferably consists of:
- at least one block (A) consisting of at least one elastomeric fluoropolymer, and
- at least one block (B) consisting of at least one thermoplastic fluoropolymer.

The Applicant has surprisingly found that organic colouring compounds are very effective in enabling colour matching for providing solutions for aesthetically agreeable appearances in shaped parts of fluoromaterials possessing elastomeric properties: the organic character of the coloring compound has been proven to be surprisingly an effective solution for thermoplastic fluoroelastomer compounds, with excellent dispersability, and yet easy colour matching, with no change in color space during processing.

For the purpose of the present invention, the term "organic colouring compound" is intended to denote an organic compound that changes the colour of reflected or transmitted light as the result of wavelength-selective absorption of the electromagnetic radiation.

The organic colouring compound may be a luminescent colouring compound [compound (L)] or a non-luminescent colouring compound [compound (N-L)].

For the purpose of the present invention, the term "luminescent colouring compound [compound (L)]" is intended to denote either a fluorescent colouring compound [compound (L-F)] or a phosphorescent colouring compound [compound (L-P)].

The terms "luminescent", "fluorescent" and "phosphorescent" are used in the present invention according to their usual meanings.

The compound (L) is usually able to re-emit the absorbed electromagnetic radiation from an excited state to a ground state.

In particular, the compound (L-F) usually absorbs electromagnetic radiation in the ultraviolet (UV) region and re-emit it in the visible region of the electromagnetic spectrum.

For the purpose of the present invention, the term "non-luminescent colouring compound [compound (N-L)]" is intended to denote a non-luminescent colouring compound which selectively absorbs electromagnetic radiation in the visible region of the electromagnetic spectrum.

The visible region of the electromagnetic spectrum typically has a wavelength of from about 400 nm to about 800 nm.

The colouring compound of the composition (C) of the invention may be either a pigment or a dye. A distinction is usually made between a pigment, which is insoluble in its vehicle (resulting in a suspension), and a dye, which either is itself a liquid or is soluble in its vehicle (resulting in a solution).

According to an embodiment of the invention, the organic colouring compound of the composition (C) of the invention may be used in the form of a solid masterbatch comprising:
- from 0.1% to 100% by weight, preferably from 1% to 60% by weight, of at least one colouring compound as defined above, and
- optionally, up to 99.9% by weight, preferably from 40% to 99% by weight, of at least one polymer resin.

Polymer resins suitable for use in the solid masterbatch of this embodiment of the invention typically include optically transparent polymer resins such as fluoropolymers, preferably elastomeric fluoropolymers, melamine-formaldehyde resins or triazine-formaldehyde resins.

The organic colouring compound of the composition (C) of the invention is typically available in the form of powder particles or pellets.

The organic colouring compound of the composition (C) of the invention is typically available in the form of pellets having an average size comprised between 1 mm and 5 mm, preferably between 2 mm and 4 mm.

The composition (C) of the invention typically comprises from 0.001% to 30% by weight, preferably from 0.001% to 10% by weight, more preferably from 0.001% to 5% by weight, of at least one colouring compound.

The composition (C) of the invention may further comprise one or more additives.

Non-limiting examples of additives suitable for use in the composition (C) of the invention include, notably, fillers such as opacifiers, silica, stabilizers, antioxidants, thickeners and plasticizers.

The composition (C) of the invention typically comprises one or more additives in an amount of from 0.5 to 40 phr, preferably from 1 to 20 phr.

In a second instance, the present invention pertains to a process for the manufacture of the composition (C) of the invention, said process comprising compounding at least one fluorinated thermoplastic elastomer and at least one organic colouring compound, wherein said fluorinated thermoplastic elastomer comprises, preferably consists of:
- at least one block (A) consisting of at least one elastomeric fluoropolymer, and
- at least one block (B) consisting of at least one thermoplastic fluoropolymer.

In a third instance, the present invention pertains to an article comprising the composition (C) of the invention.

In a fourth instance, the present invention pertains to use of the article of the invention in various applications such as, for instance, wearable devices (e.g. watches and earphones), electronic devices (e.g. mobile phones and PCs), medical applications (e.g. tubing, grips and wearables), sportswear (e.g. shoes, parts and details in clothes), sport goods (e.g. grips and accessories), architectural design, interior and exterior furnishing (e.g. parts in furniture and household products), automotive (e.g. interior and aesthetic parts), safety equipment (e.g. high visibility clothes and objects), work tools (e.g. grips, handles and protections), and hand tools (e.g. caps for pens).The article of the invention is advantageously obtainable by processing the composition (C) of the invention typically using melt-processing techniques such as compression moulding, injection moulding and extrusion moulding.

According to an embodiment of the invention, the composition (C) of the invention may be advantageously used as processing aid in a process for the manufacture of an article comprising at least one polymer.

According to this embodiment of the invention, the article of the invention is obtainable by processing a composition comprising at least one polymer, in the presence of the composition (C) of the invention, typically using melt-processing techniques such as compression moulding, injection moulding and extrusion moulding.

It has been found that the article so obtained advantageously exhibits outstanding mechanical properties.

No subsequent post-treatment or post-cure step is typically required after processing of the composition (C) of the invention into an article.

The article of the invention is typically optically transparent.

For the purpose of the present invention, the term "optically transparent" is understood to mean that incident electromagnetic radiation is allowed to pass through a material without being scattered or absorbed.

The article of the invention is advantageously optically transparent to incident electromagnetic radiation having a wavelength of from about 200 nm to about 2500 nm, preferably of from about 400 nm to about 800 nm.

The article of the invention preferably has values of Haze of less than 50%, preferably of less than 30%, more preferably of less than 15%, as measured according to ASTM D1003.

Alternatively, should the composition (C) of the invention further comprise one or more opacifiers such as, for instance, titanium dioxide, calcium carbonate, zinc oxide, antimony oxide and zinc sulfide, the article of the invention may be rendered opaque, depending on its final use.

For the purpose of the present invention, the term "opaque" is understood to mean that incident electromagnetic radiation is scattered or absorbed and is thus not allowed to pass through a material.

The fluorinated thermoplastic elastomer of the composition (C) of the invention is advantageously a block copolymer, said block copolymer typically having a structure comprising at least one block (A) alternated to at least one block (B), that is to say that said fluorinated thermoplastic elastomer typically comprises, preferably consists of, one or more repeating structures of type B-A-B.

The block (A) is typically named as soft block (A).

The block (B) is typically named as hard block (B).

For the purpose of the present invention, the term "elastomeric" is hereby intended to denote a fluoropolymer having a heat of fusion of less than 5 J/g, preferably of less than 3 J/g, more preferably of less than 2 J/g, as measured according to ASTM D3418-08.

The elastomeric fluoropolymer is typically a fluoropolymer resin serving as base constituent for obtaining a true elastomer, said fluoropolymer resin comprising more than 10% by weight, preferably more than 30% by weight of recurring units derived from at least one fluorinated monomer.

True elastomers are defined by the ASTM, Special Technical Bulletin, No. 184 standard as materials capable of being stretched, at room temperature, to twice their intrinsic length and which, once they have been released after holding them under tension for 5 minutes, return to within 10% of their initial length in the same time.

For the purpose of the present invention, the term "thermoplastic" is hereby intended to denote a fluoropolymer existing, at room temperature (25°C), below its melting point if it is semi-crystalline, or below its glass transition temperature (T_{g}) if it is amorphous. These polymers have the property of becoming soft when they are heated and of becoming rigid again when they are cooled, without there being an appreciable chemical change. Such a definition may be found, for example, in the encyclopaedia called "Polymer Science Dictionary", Mark S.M. Alger, London School of Polymer Technology, Polytechnic of North London, UK, published by Elsevier Applied Science, 1989.

The thermoplastic fluoropolymer typically has a heat of fusion of from 10 J/g to 90 J/g, preferably of from 30 J/g to 60 J/g, more preferably of from 35 J/g to 55 J/g, as measured according to ASTM D3418-08.

For the purpose of the present invention, the term "fluoropolymer" is hereby intended to denote a polymer comprising recurring units derived from at least one fluorinated monomer.

The term "fluorinated monomer" is hereby intended to denote an ethylenically unsaturated monomer comprising at least one fluorine atom.

The fluorinated monomer may further comprise one or more other halogen atoms (CI, Br, I).

The fluoropolymer may further comprise recurring units derived from at least one hydrogenated monomer.

The term "hydrogenated monomer" is hereby intended to denote an ethylenically unsaturated monomer comprising at least one hydrogen atom and free from fluorine atoms.

The fluorinated thermoplastic elastomer typically comprises, preferably consists of:
- at least one block (A) consisting of at least one elastomeric fluoropolymer, and
- at least one block (B) consisting of at least one thermoplastic fluoropolymer,
   wherein the elastomeric fluoropolymer of the block (A) is selected from the group consisting of:
   (1) vinylidene fluoride (VDF) copolymers, wherein VDF is copolymerized with at least one fluorinated monomer, said fluorinated monomer being typically selected from the group consisting of:
      (a) C₂-C₈ perfluoroolefins such as tetrafluoroethylene (TFE), hexafluoropropylene (HFP) and hexafluoroisobutylene;
      (b) hydrogen-containing C₂-C₈ fluoroolefins such as vinyl fluoride, trifluoroethylene (TrFE), perfluoroalkyl ethylenes of formula CH₂=CH-R_{f1}, wherein R_{f1} is a C₁-C₆ perfluoroalkyl group;
      (c) C₂-C₈ chloro- and/or bromo- fluoroolefins such as chlorotrifluoroethylene (CTFE);
      (d) (per)fluoroalkylvinylethers (PAVE) of formula CF₂=CFOR_{f2}, wherein R _{f2} is a C₁-C₆ (per)fluoroalkyl group, such as CF₃ (PMVE), C₂F₅ or C₃F₇;
      (e) (per)fluorooxyalkylvinylethers of formula CF₂=CFOX₀, wherein X₀ is a C₁-C₁₂ oxyalkyl group or a C₁-C₁₂ (per)fluorooxyalkyl group comprising one or more ether oxygen atoms, such as perfluoro-2-propoxypropyl group; and
      (f) (per)fluorodioxoles of formula: 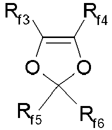 wherein each of R_{f3}, R_{f4}, R_{f5} and R_{f6}, equal to or different from each other, is independently a fluorine atom, a C₁-C₆ fluoro- or per(halo)fluoroalkyl group, optionally comprising one or more oxygen atoms, such as -CF₃, -C ₂F₅, -C₃F₇, -OCF₃ or -OCF₂CF₂OCF₃; and
   (2) tetrafluoroethylene (TFE) copolymers, wherein TFE is copolymerized with at least one fluorinated monomer, said fluorinated monomer being typically selected from the group consisting of those of classes (b), (c), (d), (e) as defined above.

The elastomeric fluoropolymer may further comprise recurring units derived from at least one hydrogenated monomer.

The elastomeric fluoropolymer may further comprise recurring units derived from at least one hydrogenated monomer selected from the group consisting of C₂-C₈ non-fluorinated olefins such as ethylene, propylene or isobutylene.

Should the elastomeric fluoropolymer be a VDF copolymer, said elastomeric fluoropolymer typically comprises, preferably consists of:
- from 45% to 90% by moles of recurring units derived from vinylidene fluoride (VDF),
- from 5% to 50% by moles of recurring units derived from at least one fluorinated monomer different from VDF, and
- optionally, up to 30% by moles of recurring units derived from at least one hydrogenated monomer.

Should the elastomeric fluoropolymer be a VDF copolymer, it may comprise, preferably consist of:
- recurring units derived from vinylidene fluoride (VDF),
- recurring units derived from at least one fluorinated monomer different from VDF and tetrafluoroethylene (TFE), and
- optionally, recurring units derived from at least one hydrogenated monomer.

The elastomeric fluoropolymer may further comprise recurring units derived from at least one bis-olefin [bis-olefin (OF)] of formula:

R_{A}R_{B}=CR_{C}-T-CR_{D}=R_{E}R_{F}

wherein R_{A}, R_{B}, R_{C}, R_{D}, R_{E} and R_{F}, equal to or different from each other, are selected from the group consisting of H, F, CI, C₁-C₅ alkyl groups and C₁-C₅ (per)fluoroalkyl groups, and T is a linear or branched C₁-C₁₈ alkylene or cycloalkylene group, optionally comprising one or more ether oxygen atoms, preferably at least partially fluorinated, or a (per)fluoropolyoxyalkylene group.

The bis-olefin (OF) is preferably selected from the group consisting of those of any of formulae (OF-1), (OF-2) and (OF-3): 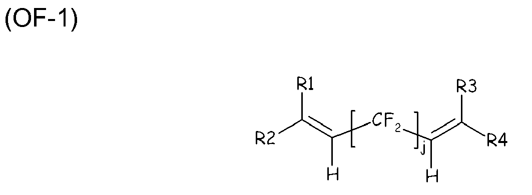 wherein j is an integer comprised between 2 and 10, preferably between 4 and 8, and R1, R2, R3 and R4, equal to or different from each other, are selected from the group consisting of H, F, C₁-C₅ alkyl groups and C₁-C₅ (per)fluoroalkyl groups; 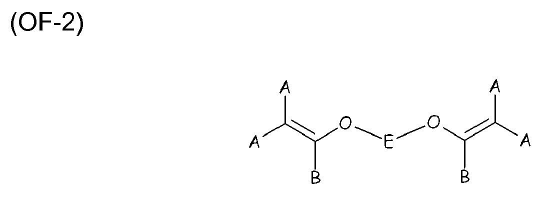 wherein each of A, equal to or different from each other and at each occurrence, is independently selected from the group consisting of H, F and CI; each of B, equal to or different from each other and at each occurrence, is independently selected from the group consisting of H, F, Cl and OR_{B}, wherein R_{B} is a branched or straight chain alkyl group which may be partially, substantially or completely fluorinated or chlorinated, E is a divalent group having 2 to 10 carbon atoms, optionally fluorinated, which may be inserted with ether linkages; preferably E is a -(CF₂)ₘ- group, wherein m is an integer comprised between 3 and 5; a preferred bis-olefin of (OF-2) type is F₂C=CF-O-(CF₂)₅-O-CF=CF₂; 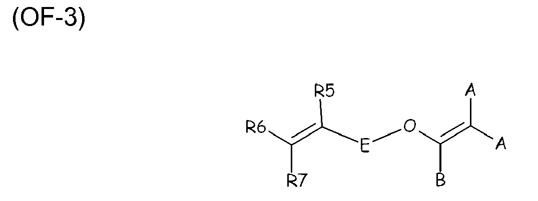 wherein E, A and B have the same meaning as defined above, R5, R6 and R7, equal to or different from each other, are selected from the group consisting of H, F, C₁-C₅ alkyl groups and C₁-C₅ (per)fluoroalkyl groups.

Should the elastomeric fluoropolymer further comprise recurring units derived from at least one bis-olefin (OF), said elastomeric fluoropolymer typically further comprises recurring units derived from at least one bis-olefin (OF) in an amount comprised between 0.01% and 1.0% by moles, preferably between 0.03% and 0.5% by moles, more preferably between 0.05% and 0.2% by moles, based on the total moles of recurring units constituting said elastomeric fluoropolymer.

The elastomeric fluoropolymer may also further comprise recurring units derived from at least one halogenated olefin [olefin (H)].

The halogenated olefin [olefin (H)] is typically of formula:

CX₂=CX-R_{f}-CHY-K

wherein X is H, F or -CH₃, Y is H or -CH₃, R_{f} is a linear or branched (per)fluoroalkylene group, optionally comprising one or more ether oxygen atoms, or a (per)fluoropolyoxyalkylene group, and K is iodine (I) or bromine (Br).

The olefin (H) is typically selected from the group consisting of iodinated olefins [olefins (I)], wherein K is iodine (I), and brominated olefins [olefins (Br)], wherein K is bromine (Br).

The olefin (H) is typically selected from the group consisting of those of any of formulae (H-1) and (H-2):

(H-1) CHY=CH-Z-CH₂CHY-K

wherein Y is H or -CH₃, Z is a linear or branched C₁-C₁₈ (per)fluoroalkylene group, optionally comprising one or more ether oxygen atoms, or a (per)fluoropolyoxyalkylene group, and K is iodine (I) or bromine (Br); and

(H-2)CF₂=CF-O-(CF₂CFWO)ₙ-(CF₂CF₂CH₂O)ₘ-CF₂CF₂CH₂K

wherein W is -F or -CF₃, K is iodine (I) or bromine (Br), m is an integer from 0 to 5, and n is 0, 1 or 2.

As regards the olefin (H) of formula (H-1), Z is preferably a C₄-C₁₂ perfluoroalkylene group, or a (per)fluoropolyoxyalkylene group of formula:

-(Q)ₚ-CF₂O-(CF₂CF₂O)ₘ(CF₂O)ₙ-CF₂-(Q)ₚ-

wherein Q is a C₁-C₆, preferably a C₁-C₃, alkylene or oxyalkylene group, p is 0 or 1, m and n are numbers such that the m/n ratio is from 0.2 to 5 and the molecular weight of said (per)fluoropolyoxyalkylene group is from 400 to 10000, preferably from 500 to 1000. Q is preferably selected from the group consisting of -CH₂O-, -CH₂OCH₂-, -CH₂- and -CH₂CH₂-.

The olefin (H) of formula (H-1) can be prepared starting from the compounds of formula K-Z-K according to the following process:
(i) adding ethylene or propylene to a compound of formula K-Z-K thereby providing a di-halogenated product of formula:

   K-CHY-CH₂-Z-CH₂-CHY-K

   wherein Y, Z and K are defined as above; and
(ii) partially dehydrohalogenating the di-halogenated product provided in step (i) with a base (for instance NaOH, KOH or a tertiary amine).

Under step (i), the addition of ethylene or propylene is usually carried out in the presence of suitable catalysts, such as redox systems, for instance Cul or FeCl₃, typically in solution in an organic solvent, for instance acetonitrile. The addition reaction between a perfluoroalkyl iodide and an olefin is described, for instance, by M. Hudliky in "Chemistry of Organic Fluorine Compounds" (2nd Edition, Ellis Horwood Ltd., Chichester, 1976), and by R. E. Banks in "Organofluorine Chemicals and Their Industrial Applications" (Ellis Horwood Ltd, Chichester, 1979), or in J. Fluorine Chemistry, 49 (1990), 1-20, and in J. Fluorine Chemistry, 58 (1992), 1-8.

The dehydrohalogenation reaction of step (ii) can be carried out either in the absence of a solvent or by dissolving the di-halogenated product in a suitable solvent such as, for instance, a glycol such as diethylenglycol, or a long chain alcohol. To maximize the yield of the olefin (H), while avoiding as far as possible a further dehydrohalogenation reaction with formation of the corresponding bis-olefin of formula CHY=CH-Z-CH=CHY, it is possible:
(1) to use the base in non-stoichiometric amounts, with a molar ratio base/di-halogenated product preferably from 1.5 to 0.5, and then separate the olefin (H) from the bis-olefin by fractional distillation; or
(2) to carry out the dehydrohalogenation reaction at reduced pressure so as to remove the olefin (H) from the reaction mixture as it forms, taking advantage of the fact that the latter has a boiling point lower than that of the starting di-halogenated product; in such case the reaction is preferably carried out without any solvent.

Alternatively, it is possible to carry out step (i) in deficient amounts of ethylene or propylene, to favour as much as possible the formation of mono-addition product K-Z-CH₂-CHY-K (which can be separated from the di-addition product by fractional distillation); the mono-addition product is then dehydrohalogenated as described above, with formation of the olefin K-Z-CH=CHY, which is finally subjected to a further addition of ethylene or propylene to give the olefin (H) of formula (H-1).

When Z is a (per)fluoroalkylene group, optionally comprising one or more ether oxygen atoms, the starting di-halogenated product K-Z-K can be obtained by telomerization of a C₂-C₄ (per)fluoroolefin or of a C₃-C₈ (per)fluorovinylether (for instance tetrafluoroethylene, perfluoropropylene, vinylidene fluoride, perfluoromethylvinylether, perfluoropropylvinylether, or mixtures thereof), using a product of formula K-(R'_{f})ₖ-K, wherein k is 0 or 1, R'_{f} is a C₁-C₈ (per)fluoroalkylene group, and K is iodine (I) or bromine (Br), as telogenic agent. Telomerization reactions of this type are described, for instance, by C. Tonelli and V. Tortelli in J. Fluorine Chem., 47 (1990), 199, or also in EP 200908 A (AUSIMONT S.P.A.) 17.12.1986 . When Z is a (per)fluoropolyoxyalkylene group, the preparation of the products I-Z-I is described, for instance, in US 3810874 (MINNESOTA MINING AND MANUFACTURING CO.) 14.05.1974 .

The olefin (I) of formula (H-2) and the preparation process thereof are described, for instance, in EP 199138 A (DAIKIN INDUSTRIES, LTD.) 29.10.1986 , which is herein incorporated by reference.

Non-limiting examples of olefins (I) of formula (H-2) include the followings:

CF₂=CF-OCF₂CF₂CH₂I

and

CF₂=CF-OCF₂CF(CF₃)OCF₂CF₂CH₂I.

Should the elastomeric fluoropolymer further comprise recurring units derived from at least one olefin (H), said elastomeric fluoropolymer typically further comprises recurring units derived from at least one olefin (H) in an amount comprised between 0.01% and 1.0% by moles, preferably between 0.03% and 0.5% by moles, more preferably between 0.05% and 0.2% by moles, based on the total moles of recurring units constituting said elastomeric fluoropolymer.

The thermoplastic fluoropolymer typically comprises, preferably consists of:
- recurring units derived from at least one fluorinated monomer, and
- optionally, recurring units derived from at least one hydrogenated monomer.

The thermoplastic fluoropolymer preferably comprises, more preferably consists of:
- recurring units derived from at least one fluorinated monomer, and
- optionally, recurring units derived from at least one hydrogenated monomer,
   wherein the fluorinated monomer is selected from the group consisting of:
   (a') C₂-C₈ perfluoroolefins such as tetrafluoroethylene (TFE) and hexafluoropropylene (HFP);
   (b') C₂-C₈ hydrogenated fluoroolefins such as vinyl fluoride, 1,2-difluoroethylene and trifluoroethylene;
   (c') perfluoroalkylethylenes of formula CH₂=CH-R_{f0}, wherein R_{f0} is a C₁-C ₆ perfluoroalkyl group;
   (d') chloro- and/or bromo- and/or iodo-C₂-C₆ fluoroolefins such as chlorotrifluoroethylene;
   (e') (per)fluoroalkylvinylethers of formula CF₂=CFOR_{f1}, wherein R_{f1} is a C₁ -C₆ fluoro- or perfluoroalkyl group, e.g. CF₃, C₂F₅, C₃F₇;
   (f') CF₂=CFOX₀ (per)fluoro-oxyalkylvinylethers, wherein X₀ is a C₁-C₁₂ alkyl group, a C₁-C₁₂ oxyalkyl group or a C₁-C₁₂ (per)fluorooxyalkyl group having one or more ether groups, such as perfluoro-2-propoxy-propyl group;
   (g') (per)fluoroalkylvinylethers of formula CF₂=CFOCF₂OR_{f2}, wherein R_{f2} is a C₁-C₆ fluoro- or perfluoroalkyl group, e.g. CF₃, C₂F₅, C₃F₇ or a C₁-C₆ (per)fluorooxyalkyl group having one or more ether groups such as -C₂F₅ -O-CF₃;
   (h') functional (per)fluoro-oxyalkylvinylethers of formula CF₂=CFOY₀, wherein Y₀ is a C₁-C₁₂ alkyl group or (per)fluoroalkyl group, a C₁-C₁₂ oxyalkyl group or a C₁-C₁₂ (per)fluorooxyalkyl group having one or more ether groups and Y₀ comprising a carboxylic or sulfonic acid group, in its acid, acid halide or salt form; and
   (i') fluorodioxoles, preferably perfluorodioxoles.

The thermoplastic fluoropolymer may comprise, preferably consist of:
- recurring units derived from vinylidene fluoride (VDF),
- optionally, from 0.1% to 10% by moles of recurring units derived from at least one fluorinated monomer different from VDF, and
- optionally, recurring units derived from at least one hydrogenated monomer.

According to an embodiment of the invention, the fluorinated thermoplastic elastomer comprises, preferably consists of:
- at least one block (A) consisting of at least one elastomeric fluoropolymer, and
- at least one block (B) consisting of at least one thermoplastic fluoropolymer,
wherein:
the elastomeric fluoropolymer typically comprises, preferably consists of:
- recurring units derived from vinylidene fluoride (VDF),
- recurring units derived from at least one fluorinated monomer different from VDF and tetrafluoroethylene (TFE), and
- optionally, recurring units derived from at least one hydrogenated monomer, and
the thermoplastic fluoropolymer typically comprises, preferably consists of:
- recurring units derived from vinylidene fluoride (VDF),
- optionally, from 0.1% to 10% by moles of recurring units derived from at least one fluorinated monomer different from VDF, and
- optionally, recurring units derived from at least one hydrogenated monomer.

The weight ratio between blocks (A) and blocks (B) in the fluorinated thermoplastic elastomer of the composition (C) of the invention is typically comprised between 5:95 and 95:5, preferably between 10:90 and 90:10, more preferably between 20:80 and 80:20, even more preferably between 60:40 and 40:60.

The fluorinated thermoplastic elastomer of the composition (C) of the invention typically has a glass transition temperature (T_{g}) below room temperature. In most cases, the fluorinated thermoplastic elastomer of the invention has advantageously a T_{g} below -10°C, preferably below -15°C, more preferably below -20°C.

The fluorinated thermoplastic elastomer of the composition (C) of the invention is typically obtainable by a process comprising the following sequential steps:
(a) polymerizing at least one fluorinated monomer and, optionally, at least one hydrogenated monomer, in the presence of a radical initiator and of an iodinated chain transfer agent, thereby providing a pre-polymer consisting of at least one block (A) containing one or more iodinated end groups; and
(b) polymerizing at least one fluorinated monomer and, optionally, at least one hydrogenated monomer, in the presence of a radical initiator and of the pre-polymer provided in step (a), thereby providing at least one block (B) grafted on said pre-polymer by means of the iodinated end groups.

The block (A) provided in step (a) of the process for the manufacture of the fluorinated thermoplastic elastomer is the same as defined hereinabove.

The block (B) provided in step (b) of the process for the manufacture of the fluorinated thermoplastic elastomer is the same as defined hereinabove.

The process for the manufacture of the fluorinated thermoplastic elastomer is preferably carried out in aqueous emulsion polymerization according to methods well known in the art, in the presence of a suitable radical initiator.

The radical initiator is typically selected from the group consisting of:
- inorganic peroxides such as, for instance, alkali metal or ammonium persulphates, perphosphates, perborates or percarbonates, optionally in combination with ferrous, cuprous or silver salts or other easily oxidable metals;
- organic peroxides such as, for instance, disuccinylperoxide, tertbutyl-hydroperoxide, and ditertbutylperoxide; and
- azo compounds (see, for instance, US 2515628 (E. I. DU PONT DE NEMOURS AND CO.) 18.07.1950 and US 2520338 (E. I. DU PONT DE NEMOURS AND CO.) 29.08.1950).

It is also possible to use organic or inorganic redox systems, such as persulphate ammonium/sodium sulphite, hydrogen peroxide/aminoiminomethansulphinic acid.

Under step (a) of the process for the manufacture of the fluorinated thermoplastic elastomer, one or more iodinated chain transfer agents are added to the reaction medium, typically of formula RₓIₙ, wherein Rₓ is a C₁ -C₁₆, preferably a C₁-C₈ (per)fluoroalkyl or a (per)fluorochloroalkyl group, and n is 1 or 2. It is also possible to use as chain transfer agents alkali or alkaline-earth metal iodides, as described in US 5173553 (AUSIMONT S.P.A.) 22.12.1992 . The amount of the chain transfer agent to be added is established depending on the molecular weight which is intended to be obtained and on the effectiveness of the chain transfer agent itself.

Under any of steps (a) and (b) of the process for the manufacture of the fluorinated thermoplastic elastomer, one or more surfactants may be used, preferably fluorinated surfactants of formula:

R_{y}-X⁻M⁺

wherein R_{y} is a C₅-C₁₆ (per)fluoroalkyl or a (per)fluoropolyoxyalkyl group, X⁻ is -COO⁻ or -S0₃⁻, and M⁺ is selected from the group consisting of H⁺, NH₄⁺, and an alkali metal ion.

Among the most commonly used surfactants, mention can be made of (per)fluoropolyoxyalkylenes terminated with one or more carboxyl groups.

When step (a) is terminated, the reaction is discontinued, for instance by cooling, and the residual monomers are removed, for instance by heating the emulsion under stirring.

The second polymerization step (b) is then carried out, feeding the new monomer mixture and adding fresh radical initiator.

If necessary, under step (b) of the process for the manufacture of the fluorinated thermoplastic elastomer, one or more further chain transfer agents may be added, which can be selected from the same iodinated chain transfer agents as defined above or from chain transfer agents known in the art for use in the manufacture of fluoropolymers such as, for instance, ketones, esters or aliphatic alcohols having from 3 to 10 carbon atoms, such as acetone, ethylacetate, diethylmalonate, diethylether and isopropyl alcohol; hydrocarbons, such as methane, ethane and butane; chloro(fluoro)carbons, optionally containing hydrogen atoms, such as chloroform and trichlorofluoromethane; bis(alkyl)carbonates wherein the alkyl group has from 1 to 5 carbon atoms, such as bis(ethyl) carbonate and bis(isobutyl) carbonate.

When the process is terminated, the fluorinated thermoplastic elastomer is isolated from the emulsion according to conventional methods, such as by coagulation by addition of electrolytes or by cooling.

Alternatively, the polymerization reaction can be carried out in mass or in suspension, in an organic liquid where a suitable radical initiator is present, according to known techniques. The polymerization temperature and pressure can vary within wide ranges depending on the type of monomers used and based on the other reaction conditions.

The process for the manufacture of the fluorinated thermoplastic elastomer is typically carried out at a temperature of from -20°C to 150°C.

The process for the manufacture of the fluorinated thermoplastic elastomer is typically carried out under pressures up to 10 MPa.

The process for the manufacture of the fluorinated thermoplastic elastomer is preferably carried out in aqueous emulsion polymerization in the presence of a microemulsion of perfluoropolyoxyalkylenes, as described in US 4864006 (AUSIMONT S.P.A.) 05.09.1989 , or in the presence of a microemulsion of fluoropolyoxyalkylenes having hydrogenated end groups and/or hydrogenated recurring units, as described in EP 625526 A (AUSIMONT S.P.A.) 23.11.1994.

The choice of the organic colouring compound is not particularly limited.

As said, the colouring compound is selected from the group consisting of organic colouring compounds; nevertheless, the said organic colouring compound may be used in combination with one or more than one inorganic colouring compound.

Mixtures of one or more organic colouring compounds and one or more inorganic colouring compounds may be used in the composition (C) of the invention. Otherwise, organic colouring compounds may be separately used.

According to an embodiment of the present invention, mixtures of one or more compounds (L) and one or more compounds (N-L) may be used in the composition (C) of the invention.

Non-limiting examples of suitable inorganic compounds (N-L) include inorganic pigments such as metal salts and metal oxides, preferably selected from the group consisting of cadmium sulfide, zinc sulfide, cadmium selenite, lead chromate, zinc chromate, aluminosilicate sulfur complex, ferric oxide, ferric oxide molybdenate, chromium oxide, copper oxide, cobalt oxide, alumina, lead oxide, carbon black and mixtures thereof.

Non-limiting examples of suitable organic compounds (N-L) include, for instance, azo pigments and polycyclic aromatic pigments, said polycyclic aromatic pigments being preferably selected from those based on cyanine, phthalocyanine such as copper phthalocyanine, anthraquinone, quinacridone, perylene, perinone, thioindigo, dioxazine, isoindolinone, isoindoline, diketopyrrolopyrrole, triarylcarbonium and quinophthalone.

Non-limiting examples of suitable organic compounds (L-F) typically include polycyclic aromatic dyes such as those based on xanthene, thioxanthene, benzoxanthene, naphthalimide, coumarin, naphtholactam, hydrazam, azlactone, methine, oxazine and thiazine.

Non-limiting examples of suitable inorganic compounds (L-F) typically include inorganic compounds comprising at least one element selected from the group consisting of rare earth metals, Zn and Mn.

Should the disclosure of any patents, patent applications, and publications which are incorporated herein by reference conflict with the description of the present application to the extent that it may render a term unclear, the present description shall take precedence.

The invention will be now described in more detail with reference to the following examples whose purpose is merely illustrative and not limitative of the scope of the invention.

### Preparative Example 1: block copolymer having structure PVDF-P(VDF-HFP)-PVDF (P(VDF-HFP) VDF: 78.5% by moles, HFP: 21.5% by moles)

In a 7.5 liters reactor equipped with a mechanical stirrer operating at 72 rpm, 4.5 I of demineralized water and 22 ml of a microemulsion, previously obtained by mixing 4.8 ml of a perfluoropolyoxyalkylene having acidic end groups of formula CF₂ClO(CF₂-CF(CF₃)O)ₙ(CF₂O)ₘCF₂COOH, wherein n/m = 10, having an average molecular weight of 600, 3.1 ml of a 30% v/v NH₄OH aqueous solution, 11.0 ml of demineralized water and 3.0 ml of GALDEN® D02 perfluoropolyether of formula CF₃O(CF₂CF(CF₃)O)ₙ(CF₂ O)ₘCF₃, wherein n/m = 20, having an average molecular weight of 450, were introduced.

The reactor was heated and maintained at a set-point temperature of 85°C; a mixture of vinylidene fluoride (VDF) (78.5% by moles) and hexafluoropropylene (HFP) (21.5% by moles) was then added to reach a final pressure of 20 bar. Then, 8 g of 1,4-diiodoperfluorobutane (C₄F₈I₂) as chain transfer agent were introduced, and 1.25 g of ammonium persulfate (APS) as initiator were introduced. Pressure was maintained at a set-point of 20 bar by continuous feeding of a gaseous mixture of vinylidene fluoride (VDF) (78.5% by moles) and hexafluoropropylene (HFP) (21.5% by moles) up to a total of 2000 g. Moreover, 0.86 g of CH₂=CH-(CF₂)₆-CH=CH₂, fed in 20 equivalent portions each 5% increase in conversion, were introduced.

Once 2000 g of monomer mixture were fed to the reactor, the reaction was discontinued by cooling the reactor to room temperature. The residual pressure was then discharged and the temperature brought to 80°C. VDF was then fed into the autoclave up to a pressure of 20 bar, and 0.14 g of ammonium persulfate (APS) as initiator were introduced. Pressure was maintained at a set-point of 20 bar by continuous feeding of VDF up to a total of 500 g. Then, the reactor was cooled, vented and the latex recovered. The latex was treated with aluminum sulphate, separated from the aqueous phase, washed with demineralized water and dried in a convection oven at 90°C for 16 hours.

Characterization data of the polymer so obtained are reported in Table 1.

### Preparative Example 2:P(VDF-HFP) fluoroelastomer (VDF: 78.5% by moles, HFP: 21.5% by moles)

In a 7.5 liters reactor equipped with a mechanical stirrer operating at 72 rpm, 4.5 I of demineralized water and 22 ml of a microemulsion, previously obtained by mixing 4.8 ml of a perfluoropolyoxyalkylene having acidic end groups of formula CF₂ClO(CF₂-CF(CF₃)O)ₙ(CF₂O)ₘCF₂COOH, wherein n/m = 10, having an average molecular weight of 600, 3.1 ml of a 30% v/v NH₄OH aqueous solution, 11.0 ml of demineralized water and 3.0 ml of GALDEN® D02 perfluoropolyether of formula CF₃O(CF₂CF(CF₃)O)ₙ(CF₂ O)ₘCF₃, wherein n/m = 20, having an average molecular weight of 450, were introduced.

The reactor was heated and maintained at a set-point temperature of 85°C; a mixture of vinylidene fluoride (VDF) (78.5% moles) and hexafluoropropylene (HFP) (21.5%moles) was then added to reach a final pressure of 20 bar. Then, 8 g of 1,4-diiodoperfluorobutane (C₄F₈I₂) as chain transfer agent were introduced, and 1.25 g of ammonium persulfate (APS) as initiator were introduced. Pressure was maintained at a set-point of 20 bar by continuous feeding of a gaseous mixture of vinylidene fluoride (VDF) (78.5% moles) and hexafluoropropylene (HFP) (21.5%moles) up to a total of 2000 g. Moreover, 0.86 g of CH₂=CH-(CF₂)₆-CH=CH₂, fed in 20 equivalent portions each 5% increase in conversion, were introduced. Then, the reactor was cooled, vented and the latex recovered. The latex was treated with aluminum sulphate, separated from the aqueous phase, washed with demineralized water and dried in a convection oven at 90°C for 16 hours.

Characterization data of the polymer so obtained are reported in Table 1.

As shown in Table 1 here below, the fluorinated thermoplastic elastomer of the present invention as notably embodied by the block copolymer of Preparative Example 1 according to the invention surprisingly has a glass transition temperature lower than the glass transition temperature of the corresponding fluoroelastomer as notably embodied by the fluoroelastomer of Preparative Example 2.

**Table 1**

| | | **Prep. Ex. 1** | | **Prep. Ex. 2** |
|---|---|---|---|---|
| **DSC** | | | | |
| T_{g} | [°C] | -21.5 | | -18.0 |
| Tₘ | [°C] | 162.5 | | - |

| **Composition - NMR** | | soft (A) | hard (B) | |
|---|---|---|---|---|
| VDF | [% mol] | 78.5 | 100 | 78.5 |
| HFP | [% mol] | 21.5 | - | 21.5 |

### Example 1

A composition was prepared by mixing using an open mill mixer the following components:
- 100 phc of the block copolymer obtained according to Preparative Example 1 of the invention, said polymer being extruded in pellets,
- 0.24 phc of TiO₂, and
- 0.007 phc of a colouring compound based on diketopyrrolopyrrole commercially available as Pigment Red 254.

Plaques were subsequently obtained by compression moulding for 5 min at 190°C.

The resulting colour was evaluated by calculating the ΔE94 value on the final plaque by reference to the colour of the initial mixture by means of a X-Rite Ci7800 spectrophotometer using a D65-10 light, according to ASTM D2244 standard.

Colour measurement on the initial mixture was carried out on a plaque with a shape similar to that of the final plaque and obtained by moulding said mixture at temperatures slightly above the room temperature in order to avoid any chemical or thermal transformation.

ΔE94 is a measure of change in visual perception of two given colours and is thus a measure of the ability of a material containing a colouring compound to retain its colour as close as possible to the original colour of the colouring compound.

On a typical scale, the ΔE94 value ranges from 0 to 100.

The lowest the ΔE94 value, the highest the colour retention properties of the material.

The results are reported in Table 2.

### Example 2

The same procedure as detailed under Example 1 was followed but replacing the colouring compound with 0.05 phc of a fluorescent colouring compound based on thioxanthene commercially available as Solvent Orange 63.

The results are reported in Table 2.

### Comparative Example 1

A compound was prepared by mixing the fluoroelastomer obtained according to Preparative Example 2 with curing agents in the following composition:
- 100 phr of the fluoroelastomer obtained according to Preparative Example 2,
- 1.5 phr of LUPEROX® 101 XL 45 2,5-bis(tert-butylperoxy)-2,5-dimethylhexane, and
- 4 phr of DRIMIX® triallyl isocyanurate (75%).

A composition was then prepared by mixing using an open mill mixer the following components:
- 100 phc of the compound so obtained,
- 0.24 phc of TiO₂, and
- 0.007 phc of a colouring compound based on diketopyrrolopyrrole commercially available as Pigment Red 254.

The composition so obtained was moulded into a plaque and post-cured according to the following procedure:
- curing for 5 minutes at 160°C,
- post-cure for 2 hours at 175°C.

The resulting colour was evaluated by calculating the ΔE94 value on the final plaque by reference to the colour of the initial mixture by means of a X-Rite Ci7800 spectrophotometer using a D65-10 light, according to ASTM D2244 standard.

Colour measurement on the initial mixture was carried out on a plaque with a shape similar to that of the final plaque and obtained by moulding said mixture at temperatures slightly above the room temperature in order to avoid any chemical or thermal transformation.

The results are reported in Table 2.

### Comparative Example 2

The same procedure as detailed under Comparative Example 1 was followed but replacing the colouring compound with 0.05 phc of a colouring compound based on thioxanthene commercially available as Solvent Orange 63.

The results are reported in Table 2.

**Table 2**

| **Run** | **ΔE94** |
|---|---|
| **Ex. 1** | 0.32 |
| **C. Ex. 1** | 2.23 |
| **Ex. 2** | 2.57 |
| **C. Ex. 2** | 10.33 |

In view of the above, it has been surprisingly found that the composition of the present invention, said composition comprising a fluorinated thermoplastic elastomer and a colouring compound, as notably embodied by the compositions of Examples 1-2 according to the invention, is advantageously capable of retaining its original colour as compared to a composition based on a fluoroelastomer as notably embodied by the compositions of Comparative Examples 1-2, respectively, as shown by the values of ΔE94 as set forth in Table 2.

## Claims

1. A composition [composition (C)] comprising:
- at least one fluorinated thermoplastic elastomer, and
- at least one organic colouring compound,
wherein said fluorinated thermoplastic elastomer comprises, preferably consists of:
- at least one block (A) consisting of at least one elastomeric fluoropolymer, and
- at least one block (B) consisting of at least one thermoplastic fluoropolymer.

2. The composition (C) according to claim 1, wherein the fluorinated thermoplastic elastomer comprises, preferably consists of, one or more repeating structures of type B-A-B.

3. The composition (C) according to claim 1 or 2, wherein the elastomeric fluoropolymer of the block (A) of the fluorinated thermoplastic elastomer has a heat of fusion of less than 5 J/g, preferably of less than 3 J/g, more preferably of less than 2 J/g, as measured according to ASTM D3418-08.

4. The composition (C) according to any one of claims 1 to 3, wherein the elastomeric fluoropolymer of the block (A) of the fluorinated thermoplastic elastomer is selected from the group consisting of:
(1) vinylidene fluoride (VDF) copolymers, wherein VDF is copolymerized with at least one fluorinated monomer; and
(2) tetrafluoroethylene (TFE) copolymers, wherein TFE is copolymerized with at least one fluorinated monomer.

5. The composition (C) according to any one of claims 1 to 4, wherein the elastomeric fluoropolymer of the block (A) of the fluorinated thermoplastic elastomer comprises, preferably consists of:
- from 45% to 90% by moles of recurring units derived from vinylidene fluoride (VDF),
- from 5% to 50% by moles of recurring units derived from at least one fluorinated monomer different from VDF, and
- optionally, up to 30% by moles of recurring units derived from at least one hydrogenated monomer.

6. The composition (C) according to any one of claims 1 to 5, wherein the thermoplastic fluoropolymer of the block (B) of the fluorinated thermoplastic elastomer has a heat of fusion of from 10 J/g to 90 J/g, preferably of from 30 J/g to 60 J/g, more preferably of from 35 J/g to 55 J/g, as measured according to ASTM D3418-08.

7. The composition (C) according to any one of claims 1 to 6, wherein the thermoplastic fluoropolymer of the block (B) of the fluorinated thermoplastic elastomer comprises, preferably consists of:
- recurring units derived from vinylidene fluoride (VDF),
- optionally, from 0.1% to 10% by moles of recurring units derived from at least one fluorinated monomer different from VDF, and
- optionally, recurring units derived from at least one hydrogenated monomer.

8. The composition (C) according to any one of claims 1 to 7, wherein the weight ratio between blocks (A) and blocks (B) in the fluorinated thermoplastic elastomer is typically comprised between 5:95 and 95:5, preferably between 10:90 and 90:10, more preferably between 20:80 and 80:20, even more preferably between 60:40 and 40:60.

9. The composition (C) according to any one of claims 1 to 8, wherein the fluorinated thermoplastic elastomer is obtainable by a process comprising the following sequential steps:
(a) polymerizing at least one fluorinated monomer and, optionally, at least one hydrogenated monomer, in the presence of a radical initiator and of an iodinated chain transfer agent, thereby providing a pre-polymer consisting of at least one block (A) containing one or more iodinated end groups; and
(b) polymerizing at least one fluorinated monomer and, optionally, at least one hydrogenated monomer, in the presence of a radical initiator and of the pre-polymer provided in step (a), thereby providing at least one block (B) grafted on said pre-polymer by means of the iodinated end groups.

10. The composition (C) according to any one of claims 1 to 9, wherein the organic colouring compound is a luminescent colouring compound [compound (L)] or a non-luminescent colouring compound [compound (N-L)].

11. A process for the manufacture of the composition (C) according to any one of claims 1 to 10, said process comprising compounding at least one fluorinated thermoplastic elastomer and at least one organic colouring compound.

12. An article comprising the composition (C) according to any one of claims 1 to 10.

13. Use of the article according to claim 12 in applications selected from the group consisting of wearable devices, electronic devices, medical applications, sportswear, sport goods, architectural design, interior and exterior furnishing, automotive, safety equipment, work tools, and hand tools.

14. Use of the composition (C) according to any one of claims 1 to 10 as processing aid in a process for the manufacture of an article comprising at least one polymer.

15. A process for the manufacture of the article according to claim 12, said process comprising processing a composition comprising at least one polymer, in the presence of the composition (C) according to any one of claims 1 to 10, typically using melt-processing techniques such as compression moulding, injection moulding and extrusion moulding.

## Patentansprüche

1. Zusammensetzung [Zusammensetzung (C)], umfassend:
- mindestens ein fluoriertes thermoplastisches Elastomer und
- mindestens eine organische Färbeverbindung,
wobei das fluorierte thermoplastische Elastomer Folgendes umfasst, vorzugsweise daraus besteht:
- mindestens einen aus mindestens einem elastomeren Fluorpolymer bestehenden Block (A) und
- mindestens einen aus mindestens einem thermoplastischen Fluorpolymer bestehenden Block (B).

2. Zusammensetzung (C) nach Anspruch 1, wobei das fluorierte thermoplastische Elastomer eine oder mehrere sich wiederholende Strukturen vom Typ B-A-B umfasst, vorzugsweise daraus besteht.

3. Zusammensetzung (C) nach Anspruch 1 oder 2, wobei das elastomere Fluorpolymer vom Block (A) des fluorierten thermoplastischen Elastomers eine gemäß ASTM D3418-08 gemessene Schmelzwärme von weniger als 5 J/g, vorzugsweise weniger als 3 J/g, weiter bevorzugt weniger als 2 J/g, aufweist.

4. Zusammensetzung (C) nach einem der Ansprüche 1 bis 3, wobei das elastomere Fluorpolymer vom Block (A) des fluorierten thermoplastischen Elastomers aus der Gruppe bestehend aus:
(1) Vinylidenfluorid(VDF)-Copolymeren, wobei VDF mit mindestens einem fluorierten Monomer copolymerisiert ist, und
(2) Tetrafluorethylen(TFE)-Copolymeren, wobei TFE mit mindestens einem fluorierten Monomer copolymerisiert ist,
ausgewählt ist.

5. Zusammensetzung (C) nach einem der Ansprüche 1 bis 4, wobei das elastomere Fluorpolymer vom Block (A) des fluorierten thermoplastischen Elastomers Folgendes umfasst, vorzugsweise daraus besteht:
- 45 Mol-% bis 90 Mol-% Wiederholungseinheiten, die sich von Vinylidenfluorid (VDF) ableiten,
- 5 Mol-% bis 50 Mol-% Wiederholungseinheiten, die sich von mindestens einem von VDF verschiedenen fluorierten Monomer ableiten, und
- gegebenenfalls bis zu 30 Mol-% Wiederholungseinheiten, die sich von mindestens einem hydrierten Monomer ableiten.

6. Zusammensetzung (C) nach einem der Ansprüche 1 bis 5, wobei das thermoplastische Fluorpolymer vom Block (B) des fluorierten thermoplastischen Elastomers eine gemäß ASTM D3418-08 gemessene Schmelzwärme von 10 bis 90 J/g, vorzugsweise von 30 bis 60 J/g, weiter bevorzugt von 35 bis 55 J/g, aufweist.

7. Zusammensetzung (C) nach einem der Ansprüche 1 bis 6, wobei das thermoplastische Fluorpolymer vom Block (B) des fluorierten thermoplastischen Elastomers Folgendes umfasst, vorzugsweise daraus besteht:
- Wiederholungseinheiten, die sich von Vinylidenfluorid (VDF) ableiten,
- gegebenenfalls 0,1 Mol-% bis 10 Mol-% Wiederholungseinheiten, die sich von mindestens einem von VDF verschiedenen fluorierten Monomer ableiten, und
- gegebenenfalls Wiederholungseinheiten, die sich von mindestens einem hydrierten Monomer ableiten.

8. Zusammensetzung (C) nach einem der Ansprüche 1 bis 7, wobei das Gewichtsverhältnis zwischen Blöcken (A) und Blöcken (B) bei dem fluorierten thermoplastischen Elastomer üblicherweise zwischen 5:95 und 95:5, vorzugsweise 10:90 und 90:10, weiter bevorzugt zwischen 20:80 und 80:20, noch weiter bevorzugt zwischen 60:40 und 40:60, liegt.

9. Zusammensetzung (C) nach einem der Ansprüche 1 bis 8, wobei das fluorierte thermoplastische Elastomer durch ein Verfahren erhältlich ist, das die folgenden aufeinanderfolgenden Schritte umfasst:
(a) Polymerisieren von mindestens einem fluorierten Monomer und gegebenenfalls mindestens einem hydrierten Monomer in Gegenwart von einem Radikalstarter und einem iodierten Kettenübertragungsmittel, wodurch ein Präpolymer, das aus mindestens einem eine oder mehrere iodierte Endgruppen enthaltenden Block (A) besteht, bereitgestellt wird, und
(b) Polymerisieren von mindestens einem fluorierten Monomer und gegebenenfalls mindestens einem hydrierten Monomer in Gegenwart von einem Radikalstarter und dem in Schritt (a) bereitgestellten Präpolymer, wodurch mindestens ein mittels der iodierten Endgruppen auf das Präpolymer gepropfter Block (B) bereitgestellt wird.

10. Zusammensetzung (C) nach einem der Ansprüche 1 bis 9, wobei es sich bei der organischen Färbeverbindung um eine lumineszierende Färbeverbindung [Verbindung (L)] oder eine nichtlumineszierende Färbeverbindung [Verbindung (N-L)] handelt.

11. Verfahren zur Herstellung der Zusammensetzung (C) nach einem der Ansprüche 1 bis 10, wobei das Verfahren das Compoundieren von mindestens einem fluorierten thermoplastischen Elastomer und mindestens einer organischen Färbeverbindung umfasst.

12. Gegenstand, der die Zusammensetzung (C) nach einem der Ansprüche 10 umfasst.

13. Verwendung des Gegenstands nach Anspruch 12 bei Anwendungen, die aus der Gruppe bestehend aus tragbaren Geräten, elektronischen Geräten, medizinischen Anwendungen, Sportbekleidung, Sportartikeln, architektonischem Design, Innen- und Außenausstattung, Automobilbereich, Sicherheitsausrüstung, Arbeitswerkzeugen und Handwerkzeugen ausgewählt sind.

14. Verwendung der Zusammensetzung (C) nach einem der Ansprüche 1 bis 10 als Verarbeitungshilfsmittel in einem Verfahren zur Herstellung eines Gegenstands, der mindestens ein Polymer umfasst.

15. Verfahren zur Herstellung des Gegenstands nach Anspruch 12, wobei das Verfahren das Verarbeiten einer mindestens ein Polymer umfassenden Zusammensetzung in Gegenwart der Zusammensetzung (C) nach einem der Ansprüche 1 bis 10, üblicherweise unter Verwendung von Schmelzeverarbeitungstechniken wie Formpressen, Spritzgießen und Extrusionsformen, umfasst.

## Revendications

1. Composition [composition (C)] comprenant :
- au moins un élastomère thermoplastique fluoré, et
- au moins un composé colorant organique,
ledit élastomère thermoplastique fluoré comprenant, préférablement étant constitué de :
- au moins un bloc (A) constitué d'au moins un fluoropolymère élastomérique, et
- au moins un bloc (B) constitué d'au moins un fluoropolymère thermoplastique.

2. Composition (C) selon la revendication 1, l'élastomère thermoplastique fluoré comprenant, préférablement étant constitué de, une ou plusieurs structures de répétition de type B-A-B.

3. Composition (C) selon la revendication 1 ou 2, le fluoropolymère élastomérique du bloc (A) de l'élastomère thermoplastique fluoré possédant une chaleur de fusion inférieure à 5 J/g, préférablement inférieure à 3 J/g, plus préférablement inférieure à 2 J/g, telle que mesurée selon la norme ASTM D3418-08.

4. Composition (C) selon l'une quelconque des revendications 1 à 3, le fluoropolymère élastomérique du bloc (A) de l'élastomère thermoplastique fluoré étant choisi dans le groupe constitué par :
(1) des copolymères de fluorure de vinylidène (VDF), le VDF étant copolymérisé avec au moins un monomère fluoré ; et
(2) des copolymères de tétrafluoroéthylène (TFE), le TFE étant copolymérisé avec au moins un monomère fluoré.

5. Composition (C) selon l'une quelconque des revendications 1 à 4, le fluoropolymère élastomérique du bloc (A) de l'élastomère thermoplastique fluoré comprenant, préférablement étant constitué de :
- de 45 % à 90 % en moles de motifs répétitifs issus du fluorure de vinylidène (VDF),
- de 5 % à 50 % en moles de motifs répétitifs issus d'au moins un monomère fluoré différent du VDF, et
- éventuellement, jusqu'à 30 % en moles de motifs répétitifs issus d'au moins un monomère hydrogéné.

6. Composition (C) selon l'une quelconque des revendications 1 à 5, le fluoropolymère thermoplastique du bloc (B) de l'élastomère thermoplastique fluoré possédant une chaleur de fusion allant de 10 J/g à 90 J/g, préférablement allant de 30 J/g à 60 J/g, plus préférablement allant de 35 J/g à 55 J/g, telle que mesurée selon la norme ASTM D3418-08.

7. Composition (C) selon l'une quelconque des revendications 1 à 6, le fluoropolymère thermoplastique du bloc (B) de l'élastomère thermoplastique fluoré comprenant, préférablement étant constitué de :
- motifs répétitifs issus du fluorure de vinylidène (VDF),
- éventuellement, de 0,1 % à 10 % en moles de motifs répétitifs issus d'au moins un monomère fluoré différent du VDF, et
- éventuellement, des motifs répétitifs issus d'au moins un monomère hydrogéné.

8. Composition (C) selon l'une quelconque des revendications 1 à 7, le rapport pondéral entre les blocs (A) et les blocs (B) dans l'élastomère thermoplastique fluoré étant généralement compris entre 5:95 et 95:5, préférablement entre 10:90 et 90:10, plus préférablement entre 20:80 et 80:20, encore plus préférablement entre 60:40 et 40:60.

9. Composition (C) selon l'une quelconque des revendications 1 à 8, l'élastomère thermoplastique fluoré pouvant être obtenu par le procédé comprenant les étapes séquentielles suivantes :
(a) polymérisation d'au moins un monomère fluoré et, éventuellement, d'au moins un monomère hydrogéné, en présence d'un initiateur de radicaux et d'un agent de transfert de chaînes iodé, obtenant ainsi un prépolymère constitué d'au moins un bloc (A) contenant un ou plusieurs groupes terminaux iodés ; et
(b) polymérisation d'au moins un monomère fluoré et, éventuellement d'au moins un monomère hydrogéné, en présence d'un initiateur de radicaux et du prépolymère obtenu dans l'étape (a), obtenant ainsi au moins un bloc (B) greffé sur ledit prépolymère au moyen des groupes terminaux iodés.

10. Composition (C) selon l'une quelconque des revendications 1 à 9, le composé colorant organique étant un composé colorant luminescent [composé (L)] ou un composé colorant non luminescent [composé (N-L)].

11. Procédé pour la fabrication de la composition (C) selon l'une quelconque des revendications 1 à 10, ledit procédé comprenant le compoundage d'au moins un élastomère thermoplastique fluoré et d'au moins un composé colorant organique.

12. Article comprenant la composition (C) selon l'une quelconque des revendications 1 à 10.

13. Utilisation de l'article selon la revendication 12 dans des applications choisies dans le groupe constitué par des dispositifs portables, des dispositifs électroniques, des applications médicales, des vêtements de sport, des articles de sport, le design architectural, l'ameublement intérieur et extérieur, le domaine automobile, les équipements de sécurité, les outils de travail, et les outils manuels.

14. Utilisation de la composition (C) selon l'une quelconque des revendications 1 à 10 en tant qu'auxiliaire de traitement dans un procédé pour la fabrication d'un article comprenant au moins un polymère.

15. Procédé pour la fabrication de l'article selon la revendication 12, ledit procédé comprenant le traitement d'une composition comprenant au moins un polymère, en présence de la composition (C) selon l'une quelconque des revendications 1 à 10, généralement à l'aide de techniques de traitement à l'état fondu telles que le moulage par compression, le moulage par injection et le moulage par extrusion.
